(19) Europäisches Patentamt
European Patent Office
Office européen des brevets

(11) **EP 4 457 125 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **23744729.7**

(22) Anmeldetag: **18.07.2023**

(51) Internationale Patentklassifikation (IPC):
**B61F 15/20** (2006.01) **B60B 37/04** (2006.01)

(52) Gemeinsame Patentklassifikation (CPC):
**B61F 15/20; B60B 17/00; B60B 37/04;**
B60Y 2200/30

(86) Internationale Anmeldenummer:
**PCT/EP2023/069903**

(87) Internationale Veröffentlichungsnummer:
**WO 2024/028101 (08.02.2024 Gazette 2024/06)**

(54) **RADSATZ MIT PRESSVERBINDUNG FÜR SCHIENENFAHRZEUGE**

WHEEL SET WITH PRESS-FIT CONNECTION FOR RAIL VEHICLES

ESSIEU MONTÉ COMPRENANT UN RACCORDEMENT À AJUSTEMENT PAR PRESSION POUR DES VÉHICULES FERROVIAIRES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.08.2022 DE 202022104384 U**

(43) Veröffentlichungstag der Anmeldung:
**06.11.2024 Patentblatt 2024/45**

(73) Patentinhaber: **Gutehoffnungshütte Radsatz GmbH**
**46145 Oberhausen (DE)**

(72) Erfinder:
• **GERLACH, Thomas Georg**
**47506 Neukirchen-Vluyn (DE)**

• **LEHNERT, Torben Felix**
**46119 Oberhausen (DE)**
• **JENNE, Sven**
**40883 Ratingen (DE)**

(74) Vertreter: **Dr. Solf & Zapf**
**Patent- und Rechtsanwalts PartG mbB**
**Schlossbleiche 20**
**42103 Wuppertal (DE)**

(56) Entgegenhaltungen:
EP-B1- 1 690 701    CZ-U1- 26 638
DE-A1- 2 520 886    DE-B4- 102005 046 595
DE-C- 806 970    US-A1- 2019 309 382

**Beschreibung**

Die Erfindung betrifft einen Radsatz für Schienenfahrzeuge. Der Radsatz weist mindestens ein Rad und eine Radsatzwelle mit zumindest einem Presssitz auf. Dabei ist das Rad mit einer Radnabenbohrung durch Längspressen oder Schrumpfen auf dem Presssitz der Radsatzwelle gefügt.

Radsätze, insbesondere in Form von Lauf- oder Treibradsätzen, werden in Schienenfahrzeugen für Güterwagen, Personenzüge, Lokomotiven, Hochgeschwindigkeitszüge, Nah- und Regionalzüge, Straßenbahnen, Stadtbahnen, S-Bahnen und U-Bahnen eingesetzt.

Bei Radsätzen von Schienenfahrzeugen werden die Welle-Nabe-Verbindungen zwischen der Radsatzwelle und zu verpressenden Bauteilen hauptsächlich durch Längspressen oder Schrumpfen hergestellt. Dazu weisen die Bauteile eine Bauteilnabenbohrung auf, die auf einem Presssitz der Radsatzwelle gefügt werden.

Aus dem Stand der Technik bekannte Bauteile eines Radsatzes sind insbesondere Räder und Funktionsbauteile, welche beispielsweise Teile einer Antriebseinheit und/oder Teile einer Bremsausrüstung umfassen. Insbesondere sind Bremsscheiben, Kupplungsteile und Getriebezahnräder Funktionsbauteile, die regelmäßig auf einen Presssitz der Radsatzwelle gepresst werden.

An die Welle-Nabe-Verbindungen der Bauteile an den Radsatzwellen werden hohe Anforderungen zur Übertragung von Antriebs- und Bremsmomenten, Momenten aus Drehschwingungen oder auch Torsions- oder Rollierschwingungen, Biegemomenten und Axialkräften gestellt. Es muss sichergestellt sein, dass die Anbauteile während des Betriebes nicht in axialer Richtung oder in Umfangsrichtung verrutschen.

Insbesondere Drehschwingungen können bei Schienenfahrzeugen dadurch entstehen, dass der Kraftschluss durch einen Längsschlupf der Räder auf einer Schiene kurzzeitig verloren geht. Dies führt zu gegenphasigen Schwingungen der beiden Räder gegeneinander und damit zu kurzzeitig sehr hohen Torsionsmomenten. Diese hohen Torsionsschwingmomente haben in der Vergangenheit in einigen Fällen zum Rutschen der Räder auf den Presssitzen der Radsatzwelle in Umfangsrichtung geführt. Es ist sicherheitsrelevant, dass diese kurzzeitig sehr hohen Torsionsmomente ohne Rutschen der Räder im Presssitz sicher übertragen werden, so dass ein nachteiliges Rutschen der Räder auf den Radsatzwellensitzen in Umfangsrichtung verhindert wird.

Aus dem Stand der Technik ist es bekannt, den hohen Torsionsmomenten mittels einer Schlupfregelung für Antriebssysteme entgegenzuwirken, indem die Schlupfregelung ein Auftreten dieser sehr hohen Torsionsschwingungen reduziert. Eine ebenfalls bekannte Gegenmaßnahme gegen das Rutschen der Räder auf den Radsatzwellensitzen aufgrund von hohen Torsionsmomenten ist es, an den Rädern Schwingungsdämpfer anzubringen.

Es ist aus dem Stand der Technik bekannt, dass die Bauteilnaben mit hohen Kräften unter Verwendung von Schmiermitteln axial auf den Presssitz der Radsatzwelle gepresst werden müssen. Je nach Durchmesser der Presssitze sind Aufpresskräfte von z.B. 300 bis 1500 kN erforderlich. Dabei werden als Schmiermittel insbesondere Molybdänsulfidpasten, Öle oder Talg verwendet. Das verwendete Schmiermittel reduziert dabei den Haftreibwert im Pressverband.

Die Anforderungen an das Fügen von Radsätzen für Bahnanwendungen sind insbesondere in der Norm "DIN EN 13260: 12-2020, Bahnanwendungen -Radsätze und Drehgestelle -Radsätze -Produktanforderungen; Deutsche Fassung EN 13260:2020" festgelegt.

Das Abpressen der Bauteile, z.B. in der Instandhaltung, erfolgt regelmäßig durch ein Drucköverfahren. Dazu weisen die Bauteile vorzugsweise Öldruckbohrungen und Ölnuten in den jeweiligen Nabenbohrungen auf. Zum Abpressen werden die Nabenbohrungen mit Drucköl beaufschlagt, so dass die Bauteile geweitet werden und dann auf dem Ölschmierfilm axial abgedrückt werden können.

Beim Auf- oder Abpressen von Bauteilen von der Radsatzwelle kann es jedoch zu Pressschäden in Form von Längsriefen und Kaltverschweißungen kommen, die die Bauteile dann unbrauchbar machen. Dies gilt insbesondere dann, wenn Bauteile im Rahmen der Wartung mehrfach auf- und abgepresst werden.

Weiterhin kann durch die dynamischen Beanspruchungen im Betrieb an den Kanten der Pressverbindungen Reibkorrosion auftreten, die zu Rissbildung führen kann.

Die DE 806 970 C offenbart, zur Vermeidung von Presssitzschäden zwischen Nabensitz der Achse und Nabenbohrung des Rades eine Schicht aus einem Gleitlagereigenschaften aufweisenden Werkstoff anzuordnen. Dazu sollen sich metallische Werkstoffe wie Zinn oder auch nichtmetallische Werkstoffe wie Kunststoffe eignen.

Aus der EP 1 379 709 B1 ist ein Verfahren zur Vermeidung von Presssitzschäden an Radsatzwellen oder zur Erhöhung der Dauerfestigkeit und Verminderung von Reibkorrosionsbildung von Presssitzen an Radsatzwellen bekannt. Dabei wird auf eine Oberfläche der Presssitze der Radsatzwelle mittels eines Plasma-Ionenimplantationsverfahrens ein den Reibungskoeffizienten reduzierendes Sulfidhaltiges Pulver aufgetragen. Durch diese Plasmabehandlung werden Festschmierstoffpartikel in die Oberfläche der Radsatzwelle implantiert. Mittels dieses Verfahrens soll eine Härtesteigerung erreicht werden, welche einen erhöhten Widerstand gegen das Auftreten von Pressriefen bewirkt und dadurch die Dauerfestigkeit des Presssitzes der Radsatzwelle gewährleistet.

Auch die CZ 26 638 U1 beschäftigt sich mit der Vermeidung von Presssitzschäden und offenbart, die Radachse an den Sitzbereichen für verschiedene Funktionsbauteile wie Räder, Getriebe oder Lager mit einer Oberflächenbeschichtung zu versehen. Hier werden verschiedene Metalle und Metalllegierungen als auch Oxidkeramik und Nichtoxidkeramik beispielhaft erwähnt.

Die US 2019/309382 A1 offenbart eine Achse für ein Schienenrad, dessen Oberfläche vollständig über die gesamte Länge durch eine induktiv gehärtete Schicht verstärkt wird.

Es ist aus dem Stand der Technik bekannt, dass eine thermische Beschichtung mit nahezu reinem Molybdän der Presssitze, die insbesondere häufig auf den Presssitzen der Radsatzwelle für die Radnabenbohrung aufgebracht wird, Pressschäden und Passungsrost vermindert. Insbesondere ist diesbezüglich das Aufbringen einer chemisch passiven Randschicht auf den Presssitzen von Radsatzwellen aus der DE 10 2005 046 595 B4 bekannt. Diese chemisch passive Randschicht härtet bzw. verfestigt die Oberfläche der Presssitze der Radsatzwelle. Als passive Randschichten schlägt die DE 10 2005 046 595 B4 Mineral- Keramik, Phosphatschichten oder Metallschichten, wie z. B. Molybdän, vor. Vorzugsweise wird dabei die Randschicht nitriert, wodurch eine Steigerung der Dauerfestigkeit des Presssitzes der Radsatzwelle erreicht werden soll. Nachteilig an diesen Beschichtungen ist jedoch, dass es sich um eine kostenintensive Beschichtung handelt.

Die aus dem Stand der Technik bekannten Oberflächenbehandlungen, insbesondere mittels eines den Reibungskoeffizienten reduzierenden Sulfid-haltigen Pulvers, wie aus der EP 1 397 709 B1, oder mittels einer thermischen Molybdän bzw. einer chemisch passiven Randschicht haben sich vorteilhaft für die Vermeidung von Presssitzschäden an Radsatzwellen aufgrund von Auf- und/oder Abpressvorgängen bzw. zur Erhöhung der Dauerfestigkeit und Verminderung von Reibkorrosionsbildung bewährt. Sie konnten jedoch nicht die Übertragungsfähigkeit der axial wirkenden Kräfte sowie der Torsions- sowie Biegemomente verstärken.

Der Erfindung liegt die Aufgabe zugrunde, einen Radsatz zur Verfügung zu stellen, welcher die aus dem Stand der Technik bekannten Nachteile überwindet, insbesondere ein Rutschen der Bauteile, zumindest des Rades, auf der Radsatzwelle vermeidet, vorzugsweise unter Beibehaltung eines zumindest gleichwertigen Schutzes gegen Pressschäden und Passungsrost und mindestens gleicher Dauerfestigkeit der Radsatzwelle.

Die Aufgabe wird erfindungsgemäß durch die Merkmale des Anspruchs 1 gelöst. Dadurch, dass auf der Radnabenbohrung des Rades eine Oberflächenbeschichtung aus einem relativ zu einem Werkstoff des Rades die Adhäsion erhöhenden Nichteisenmetall oder einer Nichteisenmetalllegierung aufgebracht ist, und auf der Radnabenbohrung (110) des Rades (102) eine Oberflächenbeschichtung (112) aus einem relativ zu einem Werkstoff des Rades (102) die Adhäsion erhöhende Nichteisenmetall oder einer Nichteisenmetalllegierung aufgebracht ist, und die Oberflächenbeschichtung aus hochreinem Kupfer oder einer Kupferlegierung aus hochreinem Kupfer besteht, und das hochreine Kupfer Reinheitsgrade von 90 % bis 99,9 % aufweist, und die Oberflächenbeschichtung (112) in einem rohen, mechanisch nicht nachbearbeiteten Zustand eine Rauheit (Ra) bis 30 $\mu$m aufweist, werden die Haftreibwerte zwischen dem Rad und der Radsatzwelle bzw. der Radnabenbohrung und dem Presssitz der Radsatzwelle stark erhöht. Die Folge ist, dass mittels der erfindungsgemäßen Oberflächenbeschichtung eine geeignete Zwischenschicht in den Wellen-Nabe-Sitzpaarungen eingebracht wird, welche zu einer höheren Übertragbarkeit von Kräften und Torsionsmomenten, insbesondere durch Torsionsschwingungen, gegenüber konventionellen Pressverbindungen führt und dadurch den Widerstand gegen ein Rutschen zumindest des Rades auf der Radsatzwelle erhöht. Zudem hat die Anordnung dieser Oberflächenbeschichtung speziell auf der Radnabe den Vorteil gegenüber einer Anordnung auf dem Presssitz der Radsatzwelle, dass bei einem Austausch des Rades, welcher aufgrund der regelmäßigen Abnutzung des Rades häufiger anfällt, automatisch eine neue Oberflächenbeschichtung zur Verfügung gestellt wird, und somit die Vorteile der Adhäsion erhöhenden Oberflächenbeschichtung langlebig anhalten, ohne dass man die Radsatzwelle mit hohem Montageaufwand austauschen müsste.

Die Erfindung stellt eine Haftreibwerterhöhung zwischen der Radnabenbohrung und dem Presssitz bereit, welche zu gegenüber aus dem Stand der Technik bekannten Welle-Nabenverbindungen eine anderthalbfache bis dreifache Steigerung der übertragbaren Kräfte und Momente aus Antrieb und Bremse sowie Torsionsschwingungen führt. Dadurch wird ein sicherer Betrieb erreicht und die Zuverlässigkeit erhöht.

Vorteilhaft stellt der Radsatz zudem mittels der erfindungsgemäßen Oberflächenbeschichtung ein Mittel zur Vermeidung von Pressschäden in Form von Längsriefen und Kaltverschweißungen beim Auf- und Abpressen der Bauteile auf die Radsatzwelle bereit. Zweckmäßig kann auf bekannte Schmierstoffe, zumindest beim Aufpressen, verzichtet werden, da die Oberflächenbeschichtung selbst ein Gleiten der Bauteile, insbesondere des Rades, beim Aufpressen auf die Radsatzwelle und/oder beim Abpressen von der Radsatzwelle hinunter ermöglicht. Insbesondere die Eignung zum mehrfachen Auf- und Abpressen wird dadurch verbessert.

In einer vorteilhaften Ausführungsform der Erfindung weist der Radsatz zumindest einen weiteren Presssitz für weitere Funktionsbauteile, insbesondere für Teile einer Antriebseinheit und/oder Teile einer Bremsausrüstung, auf. Zweckmäßig weisen die Funktionsbauteile jeweils eine Funktionsnabenbohrung auf, mit welcher sie auf dem Presssitz gefügt sind. Vorzugsweise sind die Funktionsbauteile analog zu dem Rad auf den jeweiligen Presssitz der Radsatzwelle aufgepresst oder geschrumpft.

In einer vorteilhaften Variante ist auf dem jeweiligen Presssitz der Radsatzwelle und/oder auf der Funktionsnabenbohrung des jeweiligen Funktionsbauteils eine Oberflächenbeschichtung aus einem im relativ zu einem Werkstoff der Radsatzwelle und/oder des Funktionsbauteils die Adhäsion erhöhende Nichteisenmetall oder einer Nichteisenmetalllegierung aufgebracht ist. Dadurch wird eine höhere Übertragbarkeit von Kräften und Torsionsmomenten, insbesondere durch Torsionsschwingungen, bereitgestellt. Es stellen sich hinsichtlich der Anordnung der Funktionsbauteile auf der Radsatzwelle vorteilhaft die gleichen Vorteile ein, wie es erfindungsgemäß bezüglich des Rades auf der Radsatzwelle vorgesehen ist.

Beispielhafte Funktionsbauteile sind Bremsscheiben, insbesondere Wellenbremsscheiben, Kupplungsteile und Getriebezahnräder.

Es hat sich als vorteilhaft herausgestellt, dass das Rad und/oder die Funktionsbauteile Stahl- und/oder Aluminiumbauteile sind und auf dem jeweiligen Presssitz der Radsatzwelle verpresst gefügt sind.

Als besonders vorteilhat hat sich herausgestellt, dass die Oberflächenbeschichtung aus hochreinem Kupfer mit Reinheitsgrad von 99,9 % besteht.

Insbesondere hat die Oberflächenbeschichtung aus Kupfer oder einer Kupferlegierung die Vorteile, dass zum Aufpressen insbesondere kein reibwertminderndes Schmiermittel benötigt wird und beim Abpressen von dem Rad und/oder von den Funktionsbauteilen von der Radsatzwelle die Gefahr vor Beschädigungen, wie Riefen oder Kaltverschweißungen, vermindert ist. Neben diesen Vorteilen vermindert die Oberflächenbeschichtung aus Kupfer oder einer Kupferlegierung zweckmäßig Reibkorrosion an den Kanten der Presssitze der Radsatzwelle. Insbesondere entsteht durch die genannten Vorteile keine Dauerfestigkeitsminderung der Radsatzwelle durch Montage- und Demontagebeschädigungen und/oder Reibkorrosion und/oder durch Biegemoment- und Torsionsbeanspruchungen aus dem Betriebseinsatz. Zudem hat die Oberflächenbeschichtung aus Kupfer oder einer Kupferlegierung insbesondere den Vorteil, dass in einem Pressverband der Haftreibwert sehr hoch ist und dadurch höhere Axialkräfte, Biegemomente und insbesondere höhere Torsionsmomente als bei konventionellen Pressverbänden übertragen werden können. Exemplarische Pressverbände aus dem Stand der Technik sind insbesondere die Materialpaarungen Stahl und Stahl oder Stahl mit einer Molybdänbeschichtung und Stahl.

Zweckmäßig kann die Oberflächenbeschichtung, insbesondere als Spritzschicht, mit konventionellen Oberflächenbeschichtungsverfahren auf den jeweiligen Presssitz der Radsatzwelle und/oder in der jeweiligen Radnabenbohrung und/oder der jeweiligen Funktionsnabenbohrung des Radsatzes aufgebracht werden.

Als zweckmäßig haben sich thermische Oberflächenbeschichtungsverfahren erwiesen, so dass die Oberflächenbeschichtung vorzugsweise mittels eines thermischen Oberflächenbeschichtungsverfahrens, insbesondere eines thermischen Spritzverfahrens, aufgebracht ist. Vorteilhaft wird mittels thermischer Oberflächenbeschichtungsverfahren eine geringe Porosität in der Schicht erreicht und gleichzeitig eine Oxidation des Beschichtungswerkstoffs geringgehalten.

Insbesondere hat dies eine hohe Dichte und Haftfestigkeit der Oberflächenbeschichtung zur Folge.

Exemplarische Oberflächenbeschichtungsverfahren, die zum Auftragen der Oberflächenbeschichtung eingesetzt werden, sind nicht ausschließlich Flammspritzen, insbesondere Lichtbogenflammspritzen, Hochgeschwindigkeitsflammspritzen und Plasmaflammspritzen etc. und Kaltgasspritzen. Damit wird die Oberflächenbeschichtung festhaftend auf den jeweiligen Presssitz der Radsatzwelle und/oder in der jeweiligen Radnabenbohrung und/oder der jeweiligen Funktionsnabenbohrung des Radsatzes aufgebracht, wobei eine geringe Porosität, eine geringe Oxidation des Beschichtungswerkstoffs, eine hohe Dichte und hohe Haftfestigkeit erreicht wird.

Alternativ besteht auch die Möglichkeit, dass die Oberflächenbeschichtung mittels Galvanisieren oder einem Reibauftragsverfahren aufgetragen ist.

Vorteilhaft weist die Oberflächenbeschichtung eine Dicke im Bereich von 0,04 mm bis 0,45 mm, insbesondere von 0,05 mm bis 0,4 mm, besonders bevorzugt von 0,08 mm bis 0,255 mm auf. Oberflächenbeschichtungen, welche eine Dicke in diesen Bereichen aufweisen, eignen sich hinsichtlich ihrer Haft- und Abnutzungseigenschaften besonders gut für den Einsatz auf dem jeweiligen Presssitz der Radsatzwelle und/oder an der jeweiligen Radnabenbohrung und/oder an der jeweiligen Funktionsnabenbohrung des Radsatzes. Zweckmäßig wird die Dicke der Oberflächenbeschichtung entsprechend der gewählten Übermaße für die auf die Radsatzwelle zu pressen Bauteile, insbesondere das Rad und/oder die Funktionsbauteile, ausgewählt.

Zweckmäßig weist die Oberflächenbeschichtung in einem rohen Zustand zumindest der Radnabenbohrung des einen Rads, vorzugsweise auch der Funktionsnabenbohrung zumindest des einen Funktionsbauteils, eine Rauheit (Ra) bis 20 μm, vorzugsweise bis 15 μm auf. Der spritzrohe Zustand ist insbesondere ein Zustand, in welchem die Oberflächenbeschichtung nicht nachbehandelt bzw. nicht nachbearbeitet, insbesondere nicht mechanisch nachbearbeitet ist.

Eine Variante des Radsatzes sieht es vor, dass die Radsatzwelle und das jeweilige Rad und/oder das jeweilige Funktionsbauteil jeweils mit der Oberflächenbeschichtung im rohen Zustand miteinander gefügt sind. Optional kann anwendungsabhängig eine mechanische Nachbehandlung der Oberflächenbeschichtung vorteilhaft sein.

Insbesondere ist es vorteilhaft, dass die Radsatzwelle eine zusätzliche Korrosionsschutzbeschichtung oder/und oder eine stoßdämpfende Beschichtung aufweist. Insbesondere können herkömmliche Beschichtungen dafür verwendet werden. Es ist dabei zweckmäßig, dass die Korrosionsschutzbeschichtung und/ oder die stoßdämpfende Beschichtung auf zumindest einem gegenüber der Oberflächenbeschichtung freien Oberflächenabschnitten der Radsatzwelle ausgebildet ist. Insbesondere die axial zu den Presssitzen benachbarten Bereiche der Radsatzwelle sind vorzugsweise mit der zusätzlichen Korrosionsschutzbeschichtung und/oder der stoßdämpfenden Beschichtung beschichtet. Auch ist es ergänzend oder alternativ vorteilhaft, dass die Radsatzwelle im Bereich zumindest eines Spalts einer Nabenkante, insbesondere einer Nabenkante der Radnabenbohrung und/oder der Funktionsnabenbohrung, zumindest eines Rads und/oder zumindest eines Funktionsbauteils zu dem jeweiligen Presssitz mit der Korrosionsschutzabdichtung und/oder der stoßdämpfenden Beschichtung versehen ist.

Zweckmäßig wird die Radsatzwelle mit dem Rad und/oder den Funktionsbauteilen im Längspressverfahren gefügt. Das Aufpressen der Bauteile erfolgt vorzugsweise mit dem bekannten Längspressverfahren ohne zusätzliche Schmierstoffe.

Insbesondere ist vorgesehen, dass das Aufpressen im Verlauf des Pressdiagramms die Anforderungen der Produktanforderungen für Radsätze der "DIN EN 13260: 12-2020, Bahnanwendungen -Radsätze und Drehgestelle -Radsätze - Produktanforderungen; Deutsche Fassung EN 13260:2020" erfüllt. Vorzugsweise ist daher eine Fügegeschwindigkeit entsprechend dieser Anforderungen der "DIN EN 13260: 12-2020, Bahnanwendungen -Radsätze und Drehgestelle -Radsätze - Produktanforderungen; Deutsche Fassung EN 13260:2020" anzupassen.

Besonders vorteilhaft ist vorgesehen, dass zumindest der eine Presssitz der Radsatzwelle mit der Radnabenbohrung zumindest des einen Rads und/oder der Funktionsnabenbohrung zumindest des einen Funktionsbauteils mit einer Fügegeschwindigkeit im Bereich von 20 mm/min bis 130 mm/min, insbesondere im Bereich von 30 mm/min bis 120 mm/min, vorzugsweise im Bereich von 40 mm/min bis 110 mm/min, vorteilhaft im Bereich von 50 mm/min bis 100 mm/min, besonders bevorzugt 50 mm/min im Längspressverfahren gefügt ist.

Zweckmäßig kann das Abpressen zumindest des einen Rads und/oder zumindest des einen Funktionsbauteils von der Radsatzwelle mittels aus dem Stand der Technik bekannten Verfahren, insbesondere mittels des Druckölverfahrens, erfolgen.

Es liegt im Rahmen der Erfindung, dass alle die Oberflächenbeschichtung betreffenden Merkmale sowohl die Oberflächenbeschichtung auf dem jeweiligen Presssitz der Radsatzwelle und/oder in der jeweiligen Radnabenbohrung und/oder der jeweiligen Funktionsnabenbohrung des Radsatzes betreffen.

Weitere vorteilhafte Ausgestaltungen der Erfindung ergeben sich aus der folgenden Figurenbeschreibung und den abhängigen Unteransprüchen.

Es zeigen:

Fig. 1 eine Ausführung eines erfindungsgemäßen Radsatzes mit einer Radsatzwelle und zwei auf der Radsatzwelle gefügten Rädern,

Fig. 2 eine Schnittdarstellung eines Presssitzes der Radsatzwelle des Radsatzes gemäß Fig. 1 axial zu der Radsatzwelle mit einem auf dem Presssitz gefügten Rad,

Fig. 3 eine Schnittdarstellung einer weiteren Radsatzwelle mit zwei bereiften Rädern und zwei Funktionsbauteilen axial zu der Radsatzwelle und

Fig. 4 eine Schnittdarstellung einer weiteren Radsatzwelle mit zwei Vollrädern und zwei Funktionsbauteilen axial zu der Radsatzwelle.

In den verschiedenen Figuren der Zeichnung sind gleiche Teile stets mit denselben Bezugzeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

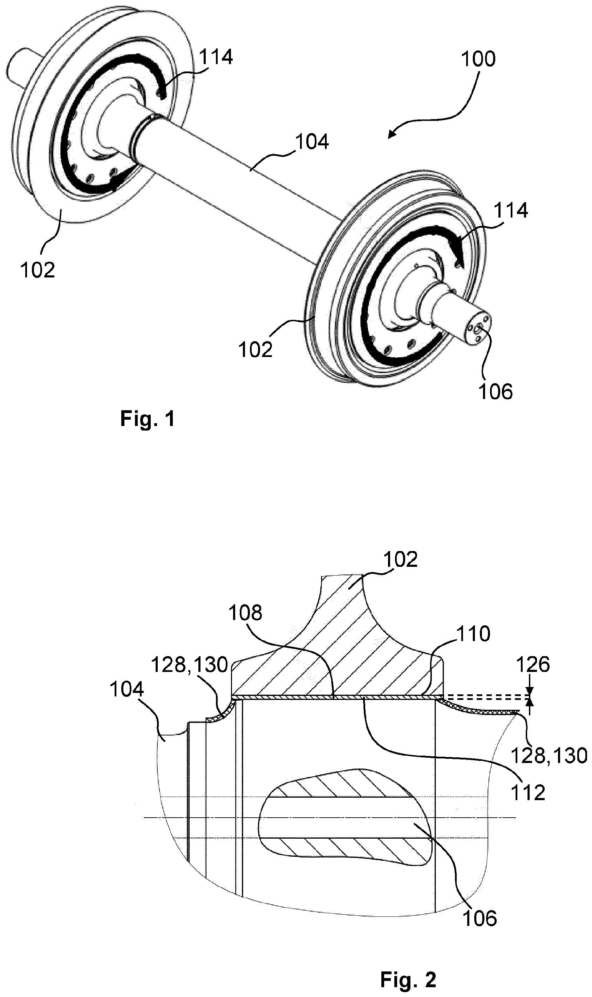

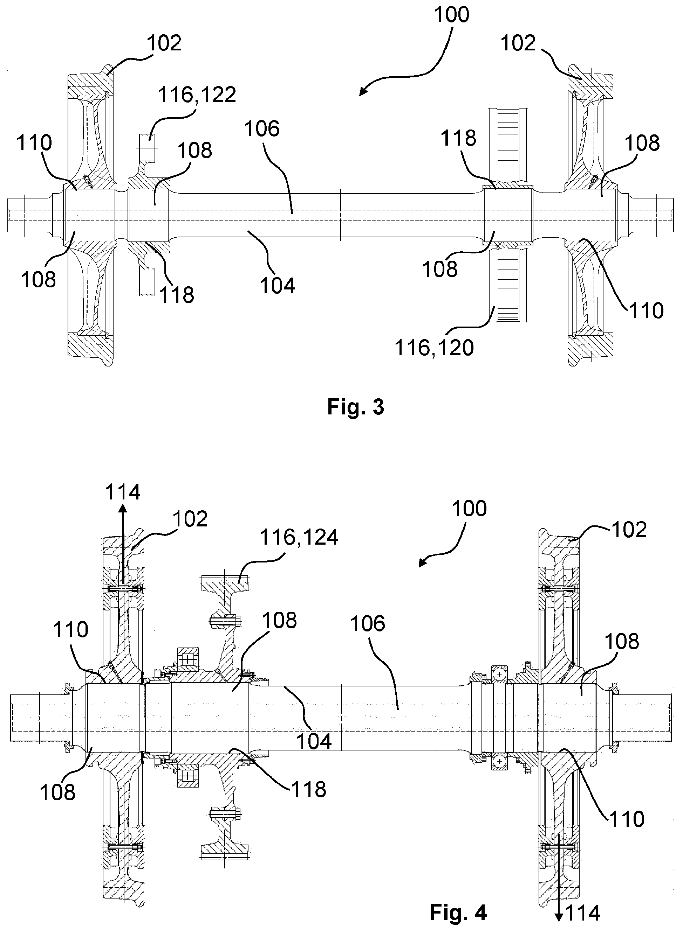

In den Fig. 1, 3 und 4 sind jeweils ein Radsatz 100 dargestellt. Der dargestellte Radsatz 100 ist exemplarisch für Schienenfahrzeuge geeignet. Der Radsatz 100 weist mindestens ein Rad 102, im dargestellten Ausführungsbeispiel vorteilhaft zwei Räder 102, und eine Radsatzwelle 104 auf. Vorteilhaft weist die Radsatzwelle 104, wie in den Fig. 2 und 3 dargestellt, eine Hohlbohrung 106 auf.

Das zumindest eine Rad 102 ist insbesondere als ein Vollrad, dargestellt in Fig. 4, oder als ein gummigefedertes Rad oder als ein bereiftes Rad, dargestellt in Fig. 3 ausgebildet sein. Die Radsatzwelle 104 ist insbesondere aus einem metallischen Werkstoff, insbesondere einem Eisenmetall oder einer Eisenmetalllegierung ausgebildet.

Wie insbesondere in den Fig. 2, 3 und 4 abgebildet, weist die Radsatzwelle 104 zumindest einen Presssitz 108 auf. Insbesondere die in Fig. 3 dargestellte Radsatzwelle 104 weist vorteilhaft vier Presssitze 108 auf. Das Rad 102 weist eine Radnabenbohrung 110 auf, wobei das Rad 102 mit der Radnabenbohrung 110 durch Längspressen oder Schrumpfen auf dem Presssitz 108 der Radsatzwelle 104 gefügt ist.

Erfindungsgemäß ist auf der Radnabenbohrung 110 des Rades 102 eine Oberflächenbeschichtung 112 aus einem relativ zu einem Werkstoff des Rades 102 die Adhäsion erhöhenden Nichteisenmetall oder einer Nichteisenmetalllegierung aufgebracht. Die Oberflächenbeschichtung 112 ist in Fig. 2 dargestellt.

Die Oberflächenbeschichtung 112 hat die vorteilhafte Eigenschaft, dass durch die Adhäsion die Haftreibwerte zwischen dem Rad 102 und der Radsatzwelle 104 bzw. der Radnabenbohrung 110 und dem Presssitz 108 der Radsatzwelle 104 stark erhöht sind. Insbesondere führt die erfindungsgemäße Oberflächenbeschichtung 112 dadurch zu einer höheren Übertragbarkeit von Kräften und Torsionsmomenten, insbesondere durch Torsionsschwingungen, gegenüber konventionellen Pressverbindungen.

Drehschwingungen werden auch als Torsions- oder Rollierschwingungen bezeichnet, die entstehen können, wenn z. B. der Kraftschluss durch Längsschlupf der Räder 102 auf der Schiene kurzzeitig verlorengeht. Dies führt, wie in den Fig. 1 und 4 durch die Pfeile 114 veranschaulicht, zu gegenphasigen Schwingungen der beiden Räder 102 gegeneinander und damit zu kurzzeitig sehr hohen Torsionsmomenten, die mittels der erfindungsgemäßen Oberflächenbeschichtung 112 sicher auf die Radsatzwelle 104 übertragen werden. Erfindungsgemäß wird durch die verbesserte Übertragbarkeit von Kräften und Torsionsmomenten ein Rutschen des jeweiligen Rads 102 auf seinem Presssitz 108 in Umfangsrichtung verhindert.

Eine weiterentwickelte, in den Fig. 3 und 4 dargestellte, Ausführung sieht es vor, dass der Radsatz 100 zumindest einen weiteren Presssitz 108 für zumindest ein weiteres Funktionsbauteil 116 aufweist. Funktionsbauteile 116 können insbesondere Teile einer Antriebseinheit und/oder Teile einer Bremsausrüstung sein. Das Funktionsbauteil 116 weist vorzugsweise eine Funktionsnabenbohrung 118 auf, mit welcher sie jeweils auf dem ihr zugeordneten Presssitz 108 gefügt ist. Entsprechend der Fügemethode der Räder 102 auf der Radsatzwelle 104 ist das Funktionsbauteil 116 vorzugsweise auf dem jeweiligen Presssitz 108 aufgepresst oder geschrumpft.

In einer weiterentwickelten Ausführung ist auf dem dem Funktionsbauteil 116 zugeordneten Presssitz 108 der Radsatzwelle 104 und/oder auf der Funktionsnabenbohrung 118 des jeweiligen Funktionsbauteils 116 eine Oberflächenbeschichtung 112 aus einem im relativ zu einem Werkstoff der Radsatzwelle 104 und/oder des Funktionsbauteils 116 die Adhäsion erhöhende Nichteisenmetall oder einer Nichteisenmetalllegierung aufgebracht ist. Insbesondere stellen sich dadurch die gleichen vorteilhaften Eigenschaften wie bei der erfindungsgemäßen Radnabenbohrung-Presssitz-Verbindung mittels der Oberflächenbeschichtung 112 ein.

Die vorteilhafte Anordnung und Pressverbindung zwischen den Funktionsbauteilen 116 und der Radsatzwelle 104 entspricht der erfindungsgemäßen Anordnung und Pressverbindung zwischen dem Rad 102 und der Radsatzwelle 104, wie sie in Fig. 2 dargestellt ist.

Funktionsbauteile 116 im Sinne der Erfindung sind insbesondere und nicht ausschließlich Bremsscheiben, z. B. Wellenbremsscheiben, Kupplungsteile und Getriebezahnräder. Exemplarisch ist in Fig. 3 ein Funktionsbauteil 116 als Wellenbremsscheibe 120 und ein Funktionsbauteil 116 als eine Antriebskupplung 122 ausgebildet und in Fig. 4 ein Funktionsbauteil 116 als ein Zahnrad 124 ausgebildet.

Zweckmäßig ist zumindest das eine Rad 102 und/oder zumindest das eine Funktionsbauteil 116 insbesondere aus einem metallischen Werkstoff, insbesondere einem Eisenmetall oder einer Eisenmetalllegierung ausgebildet. Vorzugsweise ist zumindest das eine Rad 102 und/oder zumindest das eine Funktionsbauteil 116 aus Stahl- oder Aluminium ausgebildet.

Die Oberflächenbeschichtung 112 besteht aus hochreinem Kupfer oder einer Kupferlegierung aus hochreinem Kupfer, wobei das hochreine Kupfer Reinheitsgrade von 90 % bis 99,9 %, vorzugsweise 99,9 % aufweist.

Als vorteilhaftes Oberflächenbeschichtungsverfahren, insbesondere thermisches Oberflächenbeschichtungsverfahren, zum Auftragen der Oberflächenbeschichtung 112 hat sich insbesondere ein Spritzverfahren, besonders bevorzugt ein thermisches Spritzverfahren erwiesen, so dass die Oberflächenbeschichtung 112 vorzugsweise als Spritzschicht ausgebildet ist. Vorteilhaft wird mittels thermischer Oberflächenbeschichtungsverfahren eine geringe Porosität in der Schicht erreicht und gleichzeitig eine Oxidation des Beschichtungswerkstoffs geringgehalten. Insbesondere hat dies eine hohe Dichte und Haftfestigkeit der Oberflächenbeschichtung 112 zur Folge.

Zweckmäßig ist die Oberflächenbeschichtung 112, insbesondere die als Spritzschicht ausgebildete Oberflächenbeschichtung 112, mit konventionellen Oberflächenbeschichtungsverfahren auf dem jeweiligen Presssitz 108 der Radsatzwelle 104 und/oder in der jeweiligen Radnabenbohrung 110 und/oder der jeweiligen Funktionsnabenbohrung 118 des Radsatzes 100 aufgebracht.

Beispielhaft ist die Oberflächenbeschichtung 112 insbesondere mittels Flammspritzen, Lichtbogenflammspritzen, Hochgeschwindigkeitsflammspritzen und Plasmaflammspritzen etc. und Kaltgasspritzen auf dem jeweiligen Presssitz 108 der Radsatzwelle 104 und/oder in der jeweiligen Radnabenbohrung 110 und/oder der jeweiligen Funktionsnabenbohrung 118 des Radsatzes 100 aufgebracht. Durch diese Verfahren wird die Oberflächenbeschichtung 112 festhaftend auf den jeweiligen Presssitz 108 der Radsatzwelle 104 und/oder in der jeweiligen Radnabenbohrung 110 und/oder der jeweiligen Funktionsnabenbohrung 118 des Radsatzes 100 aufgebracht, wobei eine geringe Porosität, eine geringe Oxidation des Beschichtungswerkstoffs, eine hohe Dichte und hohe Haftfestigkeit erreicht wird.

Nach einer bevorzugten Ausführung weist die Oberflächenbeschichtung 112, insbesondere die Oberflächenbeschichtung aus Kupfer oder einer Kupferlegierung, wie in Fig. 2 gekennzeichnet, eine Dicke 126 im Bereich von 0,04 mm bis 0,45 mm, insbesondere von 0,05 mm bis 0,4 mm, besonders bevorzugt von 0,08 mm bis 0,255 mm auf. Diese Dicken haben sich aufgrund ihrer Haft- und Abnutzungseigenschaften besonders gut für den Einsatz auf dem jeweiligen Presssitz 108 der Radsatzwelle 104 und/oder an der jeweiligen Radnabenbohrung 110 und/oder an der jeweiligen Funktionsnabenbohrung 118 des Radsatzes 100 bewährt. Die Dicke 126 der Oberflächenbeschichtung 112 ist vorteilhaft entsprechend der gewählten Übermaße für die auf die Radsatzwelle 104 zu pressenden Bauteile, insbesondere das zumindest eine Rad 102 und/oder das zumindest eine Funktionsbauteil 116 ausgewählt.

Erfindungsgemäß weist die Oberflächenbeschichtung 112 in einem rohen, nicht mechanisch nachbearbeiteten Zustand, eine Rauheit (Ra) bis 30 µm, insbesondere bis 20 µm, vorzugsweise bis 15 µm auf.

Eine Variante des Radsatzes 100 sieht es vor, dass die Radsatzwelle 104 und das jeweilige Rad 102 und/oder das jeweilige Funktionsbauteil 116 jeweils mit der Oberflächenbeschichtung 112 im rohen Zustand miteinander gefügt sind. Optional ist anwendungsabhängig die Oberflächenbeschichtung 112 chemisch und/oder mechanisch nachbearbeitet/nachbehandelt.

Wie in Fig. 2 dargestellt, sieht es eine vorteilhafte Ausführungsform der Erfindung vor, dass die Radsatzwelle 104 eine zusätzliche Korrosionsschutzbeschichtung 128 und/oder eine stoßdämpfende Beschichtung 130 aufweist.

Zweckmäßig ist die Korrosionsschutzbeschichtung 128 und/oder die stoßdämpfende Beschichtung 130 zumindest auf einem gegenüber der Oberflächenbeschichtung 112 freien Oberflächenabschnitten der Radsatzwelle 104, wie in Fig. 2 dargestellt, ausgebildet. In einer verbesserten Variante sind insbesondere die axial zu den Presssitzen 108 benachbarten Bereiche der Radsatzwelle 104 mit der zusätzlichen Korrosionsschutzbeschichtung 128 und/oder der stoßdämpfenden Beschichtung 130 beschichtet. Diese Ausführung ist insbesondere in Fig. 2 dargestellt.

Vorteilhaft ist zudem die Variante, dass die Radsatzwelle 104 im Bereich zumindest eines Spalts einer Nabenkante, insbesondere einer Nabenkante der Radnabenbohrung 110 und/oder der Funktionsnabenbohrung 118, zumindest des einen Rads 102 und/oder zumindest des einen Funktionsbauteils 116 zu dem jeweiligen Presssitz 108 mit der Korrosionsschutzbeschichtung 128 und/oder der stoßdämpfenden Beschichtung 120 versehen ist.

Zur Montage des Radsatzes 100, bzw. zum Fügen des Rades 102 und/oder des Funktionsbauteils 116, auf die Radsatzwelle 104 hat sich insbesondere das Längspressverfahren als vorteilhaft erwiesen. Das Aufpressen der Bauteile, insbesondere des zumindest einen Rades 102 und/oder des zumindest einen Funktionsbauteils 116, erfolgt vorzugsweise mit dem bekannten Längspressverfahren und bevorzugt ohne die Verwendung zusätzlicher Schmierstoffe.

Das Aufpressen erfüllt vorzugsweise im Verlauf des Pressdiagramms die Anforderungen der Produktanforderungen für Radsätze der "DIN EN 13260: 12-2020, Bahnanwendungen -Radsätze und Drehgestelle -Radsätze - Produktanforderungen; Deutsche Fassung EN 13260:2020". Insbesondere ist daher eine Fügegeschwindigkeit entsprechend dieser Anforderungen der "DIN EN 13260: 12-2020, Bahnanwendungen -Radsätze und Drehgestelle -Radsätze - Produktanforderungen; Deutsche Fassung EN 13260:2020" anzupassen.

Eine Form der Erfindung sieht vor, dass zumindest der eine Presssitz 108 der Radsatzwelle 104 mit der Radnabenbohrung 110 zumindest des einen Rads 102 und/oder die Funktionsnabenbohrung 118 zumindest des einen Funktionsbauteils 116 mit einer Fügegeschwindigkeit im Bereich von 20 mm/min bis 130 mm/min, insbesondere im Bereich von 30 mm/min bis 120 mm/min, vorzugsweise im Bereich von 40 mm/min bis 110 mm/min, vorteilhaft im Bereich von 50 mm/min bis 100 mm/min, besonders bevorzugt 50 mm/min, im Längspressverfahren gefügt ist.

Erfindungsgemäß kann die Oberflächenbeschichtung 112, insbesondere aus Kupfer oder einer Kupferlegierung, wesentlich höhere Aufpresskräfte in Abhängigkeit des gewählten Übermaßes zwischen dem Presssitz 108 und der Radnabenbohrung 110 oder der Funktionsnabenbohrung 118 und auf Grund des höheren Reibwertes durch die Oberflächenbeschichtung 112, insbesondere aus Kupfer oder einer Kupferlegierung, erreichen. Damit sind dann auch die übertragbaren Kräfte und Momente, insbesondere die Torsionsmomente, im Betriebseinsatz des Radsatzes 100 wesentlich höher. Insbesondere sind durch eine Oberflächenbeschichtung 112 aus Kupfer im Vergleich den aus dem Stand der Technik bekannten Materialpaarungen Stahl und Stahl oder Stahl mit einer Molybdänbeschichtung und Stahl bei gleichem Übermaß, die Aufpresskräfte anderthalbfach bis dreifach höher.

Bei konventionellen, aus dem Stand der Technik bekannten Radsätzen, insbesondere bei den bekannten Materialpaarungen Stahl und Stahl oder Stahl mit einer Molybdänbeschichtung und Stahl, liegt das Übermaß, abhängig vom Nenndurchmesser, nach der "DIN EN 13260: 12-2020, Bahnanwendungen - Radsätze und Drehgestelle -Radsätze -Produktanforderungen; Deutsche Fassung EN 13260:2020" in einem Bereich von:

$$0,0010 * D \, [mm] \; bis \; 0,0015 * D \, [mm] + 0,06 \, [mm].$$

Für aus dem Stand der Technik bekannte konventionelle Radsätze, ohne eine erfindungsgemäße Oberflächenbeschichtung 112, mit der Materialpaarung Stahl und Stahl der Pressverbindung des Rades auf der Radsatzwelle und einem Nenndurchmesser "D" von 171 mm ergibt sich gemäß der obigen Formel nach der "DIN EN 13260: 12-2020, Bahnanwendungen -Radsätze und Drehgestelle - Radsätze -Produktanforderungen; Deutsche Fassung EN 13260:2020" ein Übermaßbereich von:

$$0,0010 * 171 \, [mm] \, bis \, 0,0015 * 171 \, [mm] + 0,06 \, [mm] = 0,1710 \, [mm] bis \, 0,3165 \, [mm]$$

Bei einer erfindungsgemäßen Ausführung des Radsatzes 100 liegt das Übermaß der Pressverbindung mit der Materialpaarung Oberflächenbeschichtung 112, z. B. aus Kupfer, und Stahl vorzugsweise in einem Bereich von:

$$0,0010 * D \, [mm] \, bis \, 0,0025 * D \, [mm] + 0,06 \, [mm].$$

Insbesondere liegt das Übermaß der erfindungsgemäßen Ausführung mit der Materialpaarung Oberflächenbeschichtung 112, z. B. aus Kupfer, und Stahl gemäß dieser Formel im Vergleich zum Stand der Technik bei dem Nenndurchmesser "D" der Pressverbindung von 171 mm in einem Bereich von:

$$0,0010 * 171 \, [mm] \, bis \, 0,0025 * 171 [mm] + 0,06 \, [mm] = 0,1710 \, [mm] \, bis \, 0,4875 \, [mm]$$

Zweckmäßig wird das zumindest eine Rad 102 und/oder das zumindest eine Funktionsbauteil 116 mit einer Aufpresskraft auf den jeweiligen Presssitz 108 der Radsatzwelle 104 im Längspressverfahren gefügt, die von dem Nenndurchmesser "D" des Presssitzes bzw. der Nabenbohrung abhängig ist.

Bei Radsätzen aus dem Stand der Technik ist es bekannt die Aufpresskraft in Anlehnung an die "DIN EN 13260: 12-2020, Bahnanwendungen -Radsätze und Drehgestelle -Radsätze -Produktanforderungen; Deutsche Fassung EN 13260:2020" zu wählen. Bei bekannten Radsätzen ist dabei ein Intervall, in dem sich die Aufpresskraft "Ff" befinden muss, abhängig von der in der DIN EN 13260: 12-2020, Kap. 4.2.1 festgelegten Kraft "F", wobei die festgelegte Kraft "F" (gemessen in Kilonewton) viermal dem Nenndurchmesser "D" (gemessen in Millimeter) entspricht (F [kN] = 4 * D [mm]). Die Aufpresskraft "Ff" muss gemäß der oben genannten Norm zwischen 0,85 F und 1,45 F liegen.

Exemplarisch ergibt sich für einen aus dem Stand der Technik bekannten Radsatz mit der Materialpaarung der Pressverbindung Stahl und Stahl bei einem Nenndurchmesser von 171 mm durch die Formel nach DIN EN 13260: 12-2020, Kap. 4.2.1 die Kraft "F":

$$F = 4 * 171 = 684 \, [kN]$$

Demnach liegt die Aufpresskraft "Ff" in einem Bereich von:

$$Ff = 0,85 * 684 \, [kN] \, bis \, 1,45 * 684 \, [kN] = 581 \, [kN] \, bis \, 992 \, [kN]]$$

Erfindungsgemäß liegt im Vergleich dazu, in Abhängigkeit des Übermaßes der Pressverbindung mit der Materialpaarung Oberflächenbeschichtung 112, z. B. aus Kupfer, und Stahl bei einem Nenndurchmesser "D" von 171 mm die Aufpresskraft "Ff" in einem Bereich von 1200 kN bis 2800 kN.

Insbesondere beträgt die in Versuchen ermittelte Aufpresskraft "Ff" bei der die Oberflächenbeschichtung 112 aufweisenden Radnabenbohrung 110 welche auf dem Presssitz 108 der Radsatzwelle 104 aus Stahl gefügt ist bei dem Nenndurchmesser "D" von 171 mm größer gleich 1488 kN, vorzugsweise größer gleich 1984 kN, besonders bevorzugt größer gleich 2228 kN. Dies entspricht einem Faktor von 1,5 bis 2,25 gegenüber der maximalen Aufpresskraft von 992 kN des konventionellen Radsatzes.

Da die Aufpresskraft "Ff" proportional zum Gleitreibwert ist, ist der Haftreibwert nach dem Aufpressen mindestens so hoch, wie der Gleitreibwert. Die Versuche haben gezeigt, dass die Aufpresskraft durch die erfindungsgemäße Oberflächenbeschichtung gegenüber dem Stand der Technik bei gleichem Nenndurchmesser erhöht ist. Vorteilhaft ist somit mittels der Oberflächenbeschichtung 112 der Haftreibwert und dadurch auch die übertragbaren Kräfte und Momente, insbesondere die Torsionsmomente, gegenüber konventionellen Radsätzen deutlich erhöht.

Zum Abpressen des Rades 102 und/oder des Funktionsbauteils 116 von der Radsatzwelle 104 haben sich die aus dem Stand der Technik bekannten Verfahren, insbesondere das Druckölverfahren bewährt.

Es liegt im Rahmen der Erfindung, dass alle die Oberflächenbeschichtung 112 betreffenden Merkmale sowohl die Oberflächenbeschichtung 112 auf dem jeweiligen Presssitz 108 der Radsatzwelle 104 und/oder die Oberflächenbeschichtung 112 in der jeweiligen Radnabenbohrung 110 und/oder die Oberflächenbeschichtung 112 der jeweiligen Funktionsnabenbohrung 118 des Radsatzes 100 betreffen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

Bezugszeichenliste

| | |
|---|---|
| 100 | Radsatz |
| 102 | Rad |
| 104 | Radsatzwelle |
| 106 | Hohlbohrung |
| 108 | Presssitz |
| 110 | Radnabenbohrung |
| 112 | Oberflächenbeschichtung |
| 114 | Gegenphasige Schwingungen |
| 116 | Funktionsbauteil |
| 118 | Funktionsnabenbohrung |
| 120 | Wellenbremsscheibe |
| 122 | Antriebskupplung |
| 124 | Zahnrad |
| 126 | Dicke |
| 128 | Korrosionsschutzbeschichtung |
| 130 | Stoßdämpfende Beschichtung |
| | |
| D | Nenndurchmesser |
| Ff | Aufpresskraft |
| F | Festgelegte Kraft nach "DIN EN 13260: 12-2020, Bahnanwendungen - Radsätze und Drehgestelle -Radsätze -Produktanforderungen; Deutsche Fassung EN 13260:2020" |

**Patentansprüche**

1. Radsatz (100) für Schienenfahrzeuge, aufweisend mindestens ein Rad (102) und eine Radsatzwelle (104) mit zumindest einem Presssitz (108), wobei das Rad (102) mit einer Radnabenbohrung (110) durch Längspressen oder Schrumpfen auf dem Presssitz (108) der Radsatzwelle (104) gefügt ist, **dadurch gekennzeichnet, dass** auf der Radnabenbohrung (110) des Rades (102) eine Oberflächenbeschichtung (112) aus einem relativ zu einem Werkstoff des Rades (102) die Adhäsion erhöhende Nichteisenmetall oder einer Nichteisenmetalllegierung aufgebracht ist, und die Oberflächenbeschichtung (112) aus hochreinem Kupfer oder einer Kupferlegierung aus hochreinem Kupfer besteht, und das hochreine Kupfer Reinheitsgrade von 90 % bis 99,9 % aufweist, und die Oberflächenbeschichtung (112) in einem rohen, mechanisch nicht nachbearbeiteten Zustand eine Rauheit (Ra) bis 30 μm aufweist.

2. Radsatz (100) nach Anspruch 1,
   **dadurch gekennzeichnet, dass** der Radsatz (100) zumindest einen weiteren Presssitz (108) für zumindest ein weiteres Funktionsbauteil (116), insbesondere für ein Teil einer Antriebseinheit und/oder ein Teil einer Bremsausrüstung aufweist, wobei das Funktionsbauteil (116) jeweils eine Funktionsnabenbohrung (118) aufweist, mit welcher es auf dem Presssitz (108) gefügt, insbesondere aufgepresst oder geschrumpft ist und auf dem Presssitz (108) der Radsatzwelle (104) und/oder auf der Funktionsnabenbohrung (118) des jeweiligen Funktionsbauteils (116) eine Oberflächenbeschichtung (112) aus einem im relativ zu einem Werkstoff der Radsatzwelle (104) und/oder des Funktionsbauteils (116) die Adhäsion erhöhende Nichteisenmetall oder einer Nichteisenmetalllegierung aufgebracht ist.

3. Radsatz (100) nach Anspruch 1 oder 2,
   **dadurch gekennzeichnet, dass** die Oberflächenbeschichtung (112) aus hochreinem Kupfer mit einem Reinheitsgrad von 99,9 % besteht.

4. Radsatz (100) nach einem der Ansprüche 1 bis 3,

**dadurch gekennzeichnet, dass** die Oberflächenbeschichtung (112) mittels eines thermischen Oberflächenbeschichtungsverfahrens aufgebracht ist.

5. Radsatz (100) nach einem der Ansprüche 1 bis 4,
**dadurch gekennzeichnet, dass** die Oberflächenbeschichtung (112) als eine Spritzschicht ausgebildet ist.

6. Radsatz (100) nach einem der Ansprüche 1 bis 5,
**dadurch gekennzeichnet, dass** die Oberflächenbeschichtung (112) eine Dicke (126) im Bereich von 0,04 mm bis 0,45 mm, insbesondere von 0,05 mm bis 0,4 mm, besonders bevorzugt von 0,08 mm bis 0,255 mm aufweist.

7. Radsatz (100) nach einem der Ansprüche 1 bis 6,
**dadurch gekennzeichnet, dass** die Oberflächenbeschichtung (112) in einem rohen, mechanisch nicht nachbearbeiteten Zustand eine Rauheit (Ra) bis 20 $\mu$m, vorzugsweise bis 15 $\mu$m aufweist.

8. Radsatz (100) nach einem der Ansprüche 1 bis 7,
**dadurch gekennzeichnet, dass** das jeweilige Rad (102) und/oder das jeweilige Funktionsbauteil (116) jeweils mit der Oberflächenbeschichtung (112) im rohen Zustand auf dem jeweiligen Presssitz (108) der Radsatzwelle (104) verpresst ist.

9. Radsatz (100) nach einem der Ansprüche 1 bis 8,
**dadurch gekennzeichnet, dass** die Radsatzwelle (104) eine Korrosionsschutzbeschichtung (128) und/oder eine stoßdämpfende Beschichtung (130) aufweist.

10. Radsatz (100) nach Anspruch 9,
**dadurch gekennzeichnet, dass** die Korrosionsschutzbeschichtung (128) und/oder die stoßdämpfende Beschichtung (130) zumindest auf einem gegenüber der Oberflächenbeschichtung (112) freien Oberflächenabschnitten der Radsatzwelle (104) ausgebildet ist.

11. Radsatz (100) nach Anspruch 9 oder 10,
**dadurch gekennzeichnet, dass** die Radsatzwelle (104) im Bereich zumindest eines Spalts einer Nabenkante zumindest eines Rads (102) und/oder zumindest eines Funktionsbauteils (116) zu dem jeweiligen Presssitz (108) mit der Korrosionsschutzbeschichtung (128) und/oder der stoßdämpfenden Beschichtung (130) versehen ist.

12. Radsatz (100) nach einem der Ansprüche 1 bis 11,
**dadurch gekennzeichnet, dass** zumindest der eine Presssitz (108) der Radsatzwelle (104) mit der Radnabenbohrung (110) des Rades (102) und/oder der Funktionsnabenbohrung (118) des Funktionsbauteils (116) mit einer Fügegeschwindigkeit im Bereich von 20 mm/min bis 130 mm/min, insbesondere im Bereich von 30 mm/min bis 120 mm/min, vorzugsweise im Bereich von 40 mm/min bis 110 mm/min, vorteilhaft im Bereich von 50 mm/min bis 100 mm/min, besonders bevorzugt 50 mm/min, im Längspressverfahren gefügt ist.

**Claims**

1. A wheelset (100) for rail vehicles, comprising at least one wheel (102) and a wheelset shaft (104) with at least one press fit (108), wherein the wheel (102) is joined to a wheel hub bore (110) by longitudinal pressing or shrinking on the press fit (108) of the wheelset shaft (104),
**characterized in that** a surface coating (112) of a non-ferrous metal or a non-ferrous metal alloy which increases adhesion relative to a material of the wheel (102) is applied to the wheel hub bore (110) of the wheel (102), and the surface coating (112) consists of high-purity copper or a copper alloy of high-purity copper, and the high-purity copper degrees of purity of 90% to 99.9%has , and the surface coating (112) has a roughness (Ra) of up to 30 $\mu$m in a raw, mechanically non-reworked state.

2. Wheelset (100) according to claim 1,
**characterized in that** the wheelset (100) has at least one further press fit (108) for at least one further functional component (116), in particular for a part of a drive unit and/or a part of a brake equipment, the functional component (116) having in each case a functional hub bore (118), with which it is joined to the press fit (108), in particular is pressed on or shrunk on, and a surface coating is applied to the press fit (108) of the wheelset shaft (104) and/or to the functional hub bore (118) of the respective functional component (116), in particular pressed on or shrunk, and a surface coating (112) of a non-ferrous metal or a non-ferrous metal alloy which increases the adhesion relative to a material of the wheelset shaft (104) and/or of the functional component (116) is applied to the press fit (108) of the wheelset shaft (104) and/or to the functional hub bore (118) of the respective functional component (116).

3.  Wheelset (100) according to claim 1 or 2 ,
    **characterized in that** the surface coating (112) of high-purity copper with a degree of purity of 99.9 %.

4.  Wheelset (100) according to any one of claims 1 to 3 ,
    **characterized in that** the surface coating (112) is applied by means of a thermal surface coating process.

5.  Wheelset (100) according to any one of claims 1 to 4,
    **characterized in that** the surface coating (112) is formed as a spray coating.

6.  Wheelset (100) according to any one of claims 1 to 5,
    **characterized in that** the surface coating (112) has a thickness (126) in the range from 0.04 mm to 0.45 mm, in particular from 0.05 mm to 0.4 mm, particularly preferably from 0.08 mm to 0.255 mm.

7.  Wheelset (100) according to any one of claims 1 to 6,
    **characterized in that** the surface coating (112) has a roughness (Ra) of up to 20 $\mu$m, preferably up to 15 $\mu$m, in a raw, mechanically unfinished state.

8.  Wheelset (100) according to any one of claims 1 to 7,
    **characterized in that** the respective wheel (102) and/or the respective functional component (116) is in each case pressed with the surface coating (112) in the raw state onto the respective press fit (108) of the wheelset shaft (104).

9.  Wheelset (100) according to any one of claims 1 to 8,
    **characterized in that** the wheelset shaft (104) has an anti-corrosion coating (128) and/or a shock-absorbing coating (130).

10. Wheelset (100) according to claim 9,
    **characterized in that** the anti-corrosion coating (128) and/or the shock-absorbing coating (130) is formed at least on a surface section of the wheelset shaft (104) that is free from the surface coating (112).

11. Wheelset (100) according to claim 9 or 10,
    **characterized in that** the wheelset shaft (104) is provided with the corrosion protection coating (128) and/or the shock-absorbing coating (130) in the area of at least one gap between a hub edge of at least one wheel (102) and/or at least one functional component (116) and the respective press fit (108).

12. Wheelset (100) according to any one of claims 1 to 11,
    **characterized in that** at least the one press fit (108) of the wheelset shaft (104) is joined to the wheel hub bore (110) of the wheel (102) and/or the functional hub bore (118) of the functional component (116) at a joining speed in the range from 20 mm/min to 130 mm/min, in particular in the range from 30 mm/min to 120 mm/min, preferably in the range from 40 mm/min to 110 mm/min, advantageously in the range from 50 mm/min to 100 mm/min, particularly preferably 50 mm/min, using the longitudinal pressing method.

**Revendications**

1.  Essieu monté (100) pour véhicules ferroviaires, possédant au moins une roue (102) et un arbre d'essieu monté (104) comprenant au moins un ajustement serré (108), la roue (102) étant jointe avec un alésage de moyeu de roue (110) par pressage longitudinale ou par frettage sur l'ajustement serré (108) de l'arbre d'essieu monté (104),
    **caractérisé en ce qu'**un revêtement de surface (112) en un métal non ferreux ou en un alliage de métal non ferreux, qui augmente l'adhérence par rapport à un matériau de la roue (102), est appliqué sur l'alésage de moyeu de roue (110) de la roue (102), et le revêtement de surface (112) est constitué de cuivre de grande pureté ou d'un alliage de cuivre en cuivre de grande pureté, et le cuivre de grande pureté présente des degrés de pureté de 90% à 99,9%, et le revêtement de surface (112) présente une rugosité (Ra) allant jusqu'à 30$\mu$m à l'état brut, non retravaillé mécaniquement.

**2.** Essieu monté (100) selon la revendication 1,
**caractérisé en ce que** l'essieu monté (100) présente au moins un ajustement serré (108) supplémentaire pour au moins un composant fonctionnel (116) supplémentaire, notamment pour une partie d'une unité d'entraînement et/ou une partie d'un équipement de freinage, le composant fonctionnel (116) présentant respectivement un alésage de moyeu fonctionnel (118), avec lequel il est assemblé sur l'ajustement serré (108), notamment pressé ou fretté, et un revêtement de surface (112) en un métal non ferreux ou en un alliage de métaux non ferreux, qui augmente l'adhérence par rapport à un matériau de l'arbre d'essieu monté (104) et/ou du composant fonctionnel (116), est appliqué sur l'ajustement serré (108) de l'arbre d'essieu monté (104) et/ou sur l'alésage de moyeu fonctionnel (118) du composant fonctionnel (116) respectif.

**3.** Essieu monté (100) selon la revendication 1 ou 2,
**caractérisé en ce que** le revêtement de surface (112) est constitué de cuivre de grande pureté ayant un degré de pureté de 99,9%.

**4.** Essieu monté (100) selon l'une des revendications 1 à 3,
**caractérisé en ce que** le revêtement de surface (112) est appliqué au moyen d'un procédé de revêtement de surface thermique.

**5.** Essieu monté (100) selon l'une des revendications 1 à 4,
**caractérisé en ce que** le revêtement de surface (112) est réalisé sous la forme d'une couche pulvérisée.

**6.** Essieu monté (100) selon l'une des revendications 1 à 5,
**caractérisé en ce que** le revêtement de surface (112) présente une épaisseur (126) entre 0,04 mm à 0,45 mm, notamment de 0,05 mm à 0,4 mm, de manière particulièrement préférée de 0,08 mm à 0,255 mm.

**7.** Essieu monté (100) selon l'une des revendications 1 à 6,
**caractérisé en ce que** le revêtement de surface (112) présente une rugosité (Ra) allant jusqu'à 20$\mu$m, de préférence jusqu'à 15$\mu$m, à l'état brut, non retravaillé mécaniquement.

**8.** Essieu monté (100) selon l'une des revendications 1 à 7,
**caractérisé en ce que** la roue (102) respective et/ou le composant fonctionnel (116) respectif est respectivement pressé avec le revêtement de surface à l'état brut sur l'ajustement serré (108) respectif de l'arbre d'essieu monté (104).

**9.** Essieu monté (100) selon l'une des revendications 1 à 8,
**caractérisé en ce que** l'arbre d'essieu monté (104) a un revêtement anticorrosion (128) et/ou un revêtement amortisseur de chocs (130).

**10.** Essieu monté (100) selon la revendication 9,
**caractérisé en ce que** le revêtement anticorrosion (128) et/ou le revêtement amortisseur de chocs (130) est appliqué au moins sur une partie de la surface de l'arbre d'essieu monté (104) non recouverte par le revêtement de surface (112).

**11.** Essieu monté (100) selon la revendication 9 ou 10,
**caractérisé en ce que** l'arbre d'essieu monté (104) est pourvu du revêtement anticorrosion (128) et/ou du revêtement amortisseur de chocs (130) dans la zone d'au moins un espace entre un bord de moyeu d'au moins une roue (102) et/ou au moins un composant fonctionnel (116) et l'ajustement serré (108) respectif.

**12.** Essieu monté (100) selon l'une des revendications 1 à 11,
**caractérisé en ce qu'**au moins un ajustement serré (108) de l'arbre d'essieu monté (104) est assemblé avec l'alésage de moyeu de roue (110) de la roue (102) et/ou l'alésage de moyeu fonctionnel (118) du composant fonctionnel (116) à une vitesse d'assemblage entre 20 mm/min à 130 mm/min, en particulier entre 30 mm/min à 120 mm/min, de préférence entre 40 mm/min à 110 mm/min, avantageusement entre 50 mm/min à 100 mm/min, de manière particulièrement préférée 50 mm/min, en utilisant le procédé de pressage longitudinal.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 806970 C
- EP 1379709 B1
- CZ 26638 U1
- US 2019309382 A1
- DE 102005046595 B4
- EP 1397709 B1